# EUROPÄISCHE PATENTSCHRIFT

(11) **EP 3 439 819 B1**
(45) Veröffentlichungstag und Bekanntmachung des Hinweises auf die Patenterteilung: **29.01.2020**
(21) Anmeldenummer: 17716786.3
(22) Anmeldetag: 03.04.2017
(51) Int. Cl.: B23F 19/12, B23F 19/10, B24B 53/075, B23F 21/02, B23F 21/00

(54) **VERFAHREN ZUR MATERIALABTRAGENDEN ERZEUGUNG EINER FASE AN EINER ZAHNSTIRNKANTE UND DAZU AUSGELEGTE VORRICHTUNG**
METHOD FOR PRODUCING A CHAMFER BY REMOVAL OF MATERIAL ON A TOOTH END EDGE AND DEVICE DESIGNED THEREFOR
PROCÉDÉ DE CHANFREINAGE PAR ENLÈVEMENT DE MATIÈRE D'UNE ARÊTE FRONTALE DE DENTURE D'ENGRENAGE ET DISPOSITIF CONÇU À CET EFFET

(30) Priorität: 05.04.2016 DE 102016004112
(43) Veröffentlichungstag der Anmeldung: 13.02.2019
(73) Patentinhaber: Gleason-Pfauter Maschinenfabrik GmbH, 71636 Ludwigsburg (DE)
(72) Erfinder: SCHMEZER, Ralf, 71634 Ludwigsburg (DE)
(74) Vertreter: Leinweber & Zimmermann
(86) Internationale Anmeldenummer: PCT/EP2017/000418
(87) Internationale Veröffentlichungsnummer: WO 2017/174187

(56) Entgegenhaltungen:
- EP-A1- 1 312 445
- EP-A2- 2 823 924
- DE-A1-102011 103 216
- DE-A1-102013 015 240
- GB-A- 2 292 329
- US-A- 5 823 857
- US-A- 6 077 150

## Beschreibung

Die Erfindung betrifft ein Verfahren zur Erzeugung einer Fase an einer Stirnkante einer Werkstückverzahnung gemäß dem Oberbegriff von Anspruch 1, sowie eine zur Ausführung des Verfahrens geeignete Vorrichtung gemäß dem Oberbegriff von Anspruch 10. Ein derartiges Verfahren und eine derartige Vorrichtung sind aus dem Dokument DE 10 2013 0150 240A1 bekannt.

Derartige Verfahren zur Erzeugung einer Abtragung an den Zahnstirnkanten von Verzahnungen mit einem Anfaswerkzeug sind bekannt. Es entsteht die sogenannte "Fase", in die die scharfe Zahnstirnkante beispielsweise wälzgefräster Verzahnungen im Wege der ergänzenden Zahnbearbeitung umgewandelt wird, aus vielfältigen dem Fachmann wohl vertrauten Gründen, beispielsweise aufgrund der Verletzungsgefahr bei der Handhabung der Werkstücke, einem Verschleiß von Feinbearbeitungswerkzeugen bei der späteren Feinbearbeitung oder auch der Gefahr der während der Einsatzhärtung überholender und damit spröde werdender Kanten, die bei erhöhter Kantenbelastung an dem Getriebe abbrechen könnten. Dabei wird die Fase in Weichbearbeitung erzeugt, also vor einem Härten der Werkstücke. Zudem wird die Fase in einem Bereich der Verzahnungsflanken gebildet, der außerhalb der für die Tragfähigkeit berücksichtigten Zahnflankenbereiche liegt.

Derzeit weit verbreitet ist die Anfastechnik des sogenannten Wälzentgratens. Hier werden die Kanten durch Drücken mittels Wälzehtgraträdern plastisch in die Fase umgeformt. Die dabei auftretenden Materialverschiebungen führen zu Materialanhäufungen auf den Zahnflanken sowie axialen Sekundärgraten an den Stirnkanten, die durch geeignete Maßnahmen beseitigt werden können. Derartige Systeme sind beispielsweise in EP 1 279 127 A1 beschrieben.

EP 2 823 924 A2 offenbart ein Verfahren zum Abrichten für die Hartfeinbearbeitung von bei Verzahnungen eingesetzten Wälz- oder Profilschleifwerkzeugen.

Eine weitere zunehmend beliebte Anfastechnik ist die des schneidenden Anfasens mit geeigneten Schneidwerkzeugen, beispielsweise Schlagmesserfräser oder die in EP 1 495 824 B1 offenbarten "Chamfer-cutter". Hierzu werden in der Technik zwei Varianten vorgeschlagen, zum einen die Anordnung des schneidenden Anfaswerkzeugs auf der gleichen Werkzeugspindel wie der zum Erzeugen der Verzahnung eingesetzte Wälzfräser (EP 1 495 824 B1), wie auch getrennt von dem Wälzfräser (DE 10 2009 019 433 A1 oder DE 10 2013 015 240 A1).

Der Erfindung liegt die Aufgabe zugrunde, das Verfahren der eingangs genannten Art insbesondere unter dem Aspekt einer möglichst einfach erreichten guten Bearbeitungsqualität der erzeugten Fase zu verbessern.

Diese Aufgabe wird von der Erfindung in verfahrenstechnischer Hinsicht gemäß Anspruch 1 durch eine Weiterbildung des Verfahrens der eingangs genannten Art gelöst, die im Wesentlichen dadurch gekennzeichnet ist, dass mit geometrisch unbestimmter Schneide abgetragen wird und das Abtragen in einer in Abhängigkeit von vorgegebenen, die zu erzeugende Fase charakterisierenden Parametern vorgenommene Abstimmung zwischen einer insbesondere änderbaren Profilierung des Anfaswerkzeugs und einer für den Bearbeitungseingriff herangezogenen Maschinenachssteuerung erfolgt.

So ist im Rahmen der Erfindung erkannt worden, dass Fasen mit vorgegebenen Parametern passend zu diesen Parametern dadurch hergestellt werden können, dass man in deren Abhängigkeit eine Abstimmung zwischen einer Profilierung des Anfaswerkzeugs geometrisch unbestimmter Schneide und der für den Bearbeitungseingriff herangezogenen Maschinenachssteuerung vornimmt. Die Fase ergibt sich somit nicht von "zufälliger" Gestalt im Ergebnis des sich verwendeten Werkzeugs und dem herangezogenen Bearbeitungseingriff, sondern umgekehrt sind die Profilierung des Werkzeugs und die Maschinenachssteuerung in ihrer gegenseitigen Abstimmung eingestellt auf die vorgegebenen Fasenparameter. Durch die Gestaltung der Anfaswerkzeuge mit geometrisch unbestimmter Schneide wird zwar in Kauf genommen, dass die Anfaszeiten wie bei "Chamfer-cuttern" nicht voll erreicht werden können, allerdings ergibt sich eine höhere Oberflächenqualität der Fasenfläche. Bei der besonders bevorzugt herangezogenen änderbaren Profilierung des Anfaswerkzeugs wird zudem eine höhere Flexibilität erreicht, da sich bei Änderung der die Fase charakterisierenden Parametern, beispielsweise bei einer anderen WerkstückCharge, die davon abhängige Neuabstimmung nicht mehr zur Konstruktion eines neuen Anfaswerkzeugs im Ganzen führt, sondern die Implementierung der Neuabstimmung durch eine Umprofilierung des bereits vorhandenen Anfaswerkzeugs erfolgen kann.

Bei der Abstimmung zwischen der Profilierung des Anfaswerkzeugs und der Maschinenachssteuerung wird berücksichtigt, dass z.B. bei einem schneckenartigen Werkzeug ein Teil des Werkzeug-Profilwinkels in Abhängigkeit des sogenannten "Hobbing Offset Angle" (Werkzeugmitte gegenüber Stirnebene des Werkstücks axial bezüglich der Werkstückachse versetzt) zur Bildung eines Fasenwinkels beiträgt, neben Steigungshöhe des Werkzeugs und Schwenkwinkel der Werkzeugachse um die Achsabstandsrichtung, wobei dieser Beitrag abhängig von einer tangentialen Verschiebung des Werkzeugs eingeht. Zudem wird berücksichtigt, dass sich eine Verschiebung des Eingriffspunkts tangential aus der Maschinenmitte hinaus ebenfalls auf den Fasenwinkel auswirkt.

In einer besonders bevorzugten Ausgestaltung ist der Bearbeitungseingriff ein wälzender Bearbeitungseingriff und das Anfaswerkzeug insbesondere schneckenförmig. So kann beispielsweise eine Schleifschnecke mit insbesondere Korrund als Schleifmittel herangezogen werden. Die Schneckenlänge ist vorzugsweise durch vier Windungen der weniger, insbesondere drei Windungen oder weniger bestimmt.

In einer weiteren Ausgestaltung ist vorgesehen, dass die Abstimmung ein das Profil des Anfaswerkzeugs änderndes Abrichten umfasst. Dies kann, wie oben bereits erwähnt, bei einem Werkstück-Chargenwechsel angewendet werden. Das Abrichten könnte durch ein Profilabrichten realisiert werden, was sich insbesondere bei hohen Werkstück-Chargen anbietet. Dies ermöglicht ein Nachprofilieren nach Abnutzung des Anfaswerkzeugs nach einer geeigneten Anzahl von bearbeiteten Werkstücken. In einer anderen bevorzugten Gestaltung wird ein Formabrichten eingesetzt. Dies erhöht nochmals die Flexibilität des Verfahrens, da bei entsprechender Anordnung der Abrichteinrichtung an der Anfaseinheit ein Werkzeugwechsel selbst bei Änderung der vorgegebenen Fasenparameter nicht mehr erforderlich ist.

In einer weiteren bevorzugten Ausführungsform wird zeitlich zumindest teilweise überlappend mit dem Abrichten eine zumindest teilweise Neuberechnung der Steuerparameter der Maschinenachssteuerung vorgenommen. Auf diese Weise kann die Bearbeitungszeit im Anfasprozess weiter verringert werden.

Es ist denkbar, die Fasen an der rechten und linken Flanke einer Zahnlücke im simultanen Bearbeitungseingriff zu erzeugen (Zweiflanken-Verfahren). Bevorzugt kommt jedoch das Einflanken-Verfahren zum Einsatz. Insbesondere ist dazu vorgesehen, dass das Anfaswerkeug ein erstes Anfaswerkzeug ist und die damit erzeugte Abtragung eine erste Abtragung an einer Flanke einer Zahnlücke ist, und dass an der anderen Flanke der Zahnlücke eine durch insbesondere unterschiedliche Parameter charakterisierte zweite Abtragung mit einem insbesondere vom ersten Anfaswerkzeug unterschiedlichen zweiten Anfaswerkzeug erzeugt wird. Dies erhöht nochmals die Flexibilität des Verfahrens, da die Fasen (auf Kosten der Bearbeitungszeit) mit geringeren durch den Prozess vorgegebenen Zwangsbedingungen stärker variiert werden können. Dieser Vorteil kommt besonders bei schrägverzahnten Werkstücken zur Geltung.

In diesem Zusammenhang kann vorgesehen werden, dass jedes der beiden Anfaswerkzeuge seinen eigenen Drehantrieb erhält. In einer besonders bevorzugten Ausgestaltung ist jedoch vorgesehen, dass beide Anfaswerkzeuge von demselben Antrieb angetrieben werden. Dies vereinfacht den Aufbau einer das Verfahren durchführenden Anfasvorrichtung.

Hinsichtlich der die Fase charakterisierenden Parameter ist vorgesehen, dass diese für die erste und/oder zweite Abtragung eine Formvorgabe enthalten. So könnte die Fase in Draufsicht von der Form her kommaförmig gestaltet sein, ohne dass der Zahngrund eine Fase erhält (ZKO für den Fall, dass dies an beiden Flanken eines Zahns gewählt wird), oder die Fasen bis in den Zahngrund hineingeführt werden (ZKM bei zweiflankiger derartiger Betrachtung). Es kann jedoch auch daran gedacht werden, die Fase in Draufsicht wenigstens parallel und höchstens annähernd kommaförmig zu gestalten, wobei hier bevorzugt die Fase bis in den Zahngrund reicht (ZPM). Dabei wird die zweite oder dritte der genannten Alternativen bevorzugt. Weitere die Fase charakterisierende Parameter können die Anfaswinkel (bzw. Fasenwinkel, d.h. der Winkel zwischen einer Tangente an die Fase in einer Ebene an den Grundkreis im Punkt der z.B. oberen Stirnschnittebene der Verzahnung und einer Parallelen zur Verzahnungsachse durch diesen Punkt) mit ggf. unterschiedlichen Anfaswinkeln für die spitze Kante und stumpfe Kante bei Schrägverzahnungen sein, sowie als Maß für die Abtragung auch die Fasenbreite. Letztere könnte als Funktion der Zahnhöhe vorgegeben werden, oder auch an einzelnen Punkten, beispielsweise am Zahnkopf und am Zahngrund. Desweiteren ist vorgesehen, dass für eine oder mehrere der Fasenparameter keine exakten Zahlenwertvorgaben, sondern Randbedingungen vorgegeben werden, beispielsweise erlaubte Toleranzfelder, in denen sich der Parameter zu bewegen hat. Mit dem erfindungsgemäßen Verfahren ist es somit möglich, Fasen gewünschter und sehr konkret definierter Form gezielt herzustellen.

In vorrichtungstechnischer Hinsicht wird die Aufgabe gelöst durch eine Vorrichtung gemäß Anspruch 10 zur Erzeugung einer Abtragung an einer Zahnstirnkante einer Werkstückverzahnung, mit einer drehbar angetriebenen Werkstückspindel zur Aufnahme eines die Werkstückverzahnung tragenden Werkstücks, einem das Abtragen in Bearbeitungseingriff mit der Werkstückverzahnung bewirkenden drehbar angetriebenen Anfaswerkzeug und einer Steuereinrichtung, von der gesteuerte Maschinenachsbewegungen den Bearbeitungseingriff herbeiführen, die im Wesentlichen dadurch gekennzeichnet ist, dass das Anfaswerkzeug mit geometrisch unbestimmter Schneide abträgt und eine insbesondere änderbare Profilierung aufweist und die Steuereinrichtung die für das Abtragen herangezogenen Maschinenachsbewegungen in einer in Abhängigkeit von vorgegebenen, die zu erzeugende Abtragung charakterisierenden Parametern vorgenommenen Abstimmung mit der Profilierung des Anfaswerkzeugs betreibt.

Die Vorteile der erfindungsgemäßen Vorrichtung ergeben sich aus der obigen Beschreibung des erfindungsgemäßen Verfahrens.

Hinsichtlich der Maschinenachsen ist vorgesehen, dass die Vorrichtung wenigstens zwei, bevorzugt wenigstens drei, insbesondere wenigstens vier Maschinenachsen zur Einstellung der Relativlage zwischen Anfaswerkzeug und Werkstückverzahnung aufweist, die unabhängig voneinander ansteuerbar sind und die wenigstens eine den Achsabstand zwischen der Drehachse der Werkstückverzahnung und einer Drehachse des Anfaswerkzeugs ändernde Radialachse und eine wenigstens eine Richtungskomponente parallel zur Drehachse der Werkstückverzahnung aufweisende Axialachse umfassen. Dies erlaubt eine hohe Flexibilität in der Einstellbarkeit des Bearbeitungseingriffs. Besonders bevorzugt ist eine, bevorzugt mehrere dieser Positionierachsen werkzeugseitig angeordnet. Dies erlaubt Bewegungsmöglichkeiten des Werkzeugs nicht nur zum Werkstück hin, sondern auch in eine Position, in der eine Profilierung oder Umprofilierung des Werkzeugs erfolgen kann.

Insbesondere kann vorgesehen werden, dass die Maschinenachssteuerung ausgelegt ist, wenigstens zwei, mehr als zwei oder alle der folgenden Bearbeitungspositionen anzufahren: Bearbeitungseingriff erstes Werkzeug für Einflankenbearbeitung an einer Stirnseite der Werkstückverzahnung, Bearbeitungseingriff des anderen Anfaswerkzeugs mit der anderen Zahnkante an dieser Stirnseite der Werkstückverzahnung, Bearbeitungseingriff des (ersten) Anfaswerkzeugs an der einen Zahnflanke an der anderen Stirnseite des Werkstücks und Bearbeitungseingriff des zweiten Anfaswerkzeugs an der anderen Zahnflanke an der anderen Stirnseite der Werkstückverzahnung.

Dieser Aspekt wird von der Erfindung auch völlig unabhängig von der Art der Erzeugung der Fase als vorteilhaft angesehen. Die Erfindung offenbart somit ebenfalls als eigenständig schutzwürdig ein Verfahren zum Erzeugen einer Fase an Links- und Rechtsflanke beider Stirnseiten eines verzahnten Werkstücks durch spanenden Materialabtrag, bei dem alle vier Fasen zeitlich aufeinanderfolgend im Einflankenverfahren gebildet werden und die Fasen an den Zahnstirnkanten der gleichen Stirnseite sich hinsichtlich ihrer Fasenparameter unterscheiden und mit unterschiedlichen Anfaswerkzeugen gebildet werden, wobei Anfaswerkzeuge mit geometrisch unbestimmter Schneide bevorzugt werden.

In diesem Zusammenhang hat es sich als vorteilhaft erwiesen, wenn das erste Anfaswerkzeug und das zweite Anfaswerkzeug eine gemeinsame Drehachse aufweisen, die um eine Achse schwenkbar ist, deren Schnitt mit der gemeinsamen Drehachse in Projektion auf eine Ebene gesehen, die die gemeinsame Drehachse enthält und die orthogonal zur Schwenkachse der gemeinsamen Drehachse verläuft, zwischen den beiden Anfaswerkzeugen liegt. Auch diese Gestaltung ist unabhängig von der Art der Anfaswerkzeuge im Rahmen der Erfindung vorteilhaft gesehen.

In einer weiteren bevorzugten Gestaltung der Vorrichtung ist diese mit einer Abrichteinrichtung zum Abrichten des Anfaswerkzeugs (oder der Anfaswerkzeuge) ausgestattet, die bevorzugt derart angeordnet ist, dass ein Abrichteingriff zwischen einem Abrichter der Abrichteinrichtung und dem Anfaswerkzeug ohne Aufspannungsänderung des Anfaswerkzeugs über Maschinenachsbewegung der Vorrichtung erreichbar ist.

In einer diesbezüglich weiter bevorzugten Gestaltung können werkzeugseitig zwei weitere Bearbeitungspositionen angefahren werden, nämlich eine Abrichtposition, in der das erste Anfaswerkzeug abgerichtet wird, und einer weiteren Abrichtposition, in der das zweite Anfaswerkzeug abgerichtet wird.

Wie bereits angedeutet kann das bevorzugt vorgesehene zweite Anfaswerkzeug bevorzugt mit einem parallel, insbesondere koaxial zur Achse des ersten Anfaswerkzeugs angeordneten Drehachse vorgesehen werden, und insbesondere ein gemeinsamer Antrieb für beide Anfaswerkzeuge vorgesehen sein.

Falls die Bearbeitungszeiten noch weiter herabgesetzt werden sollen, kann auch an Varianten gedacht werden, in denen die Vorrichtung ein zeitliches Überlappen eines Bearbeitungseingriffs eines der Anfaswerkzeuge der Werkstückverzahnung und eines Abrichteingriffs des anderen Anfaswerkzeugs mit dem Abrichter erlaubt. An dieser Gestaltung könnte die Abrichteinrichtung eigene Positionierbewegungsachsen erhalten.

Die Anfasvorrichtung könnte in eine zur Erzeugung der Werkstückverzahnungen ausgelegten Verzahnungsmaschine integriert sein, oder in einen Verbund, in dem diese Verzahnungsmaschine eingegliedert ist. Dabei könnte sie auch an die Verzahnungsmaschine angebaut sein. In einer anderen Gestaltung kann vorgesehen werden, dass die Anfasvorrichtung als völlig eigenständige Anfasmaschine ausgeführt ist.

Das erfindungsgemäße Konzept ist sowohl für innenverzahnte als auch für außenverzahnte Werkstücke anwendbar. Bei innenverzahnten Werkstücken kann vorgesehen werden, dass die Vorrichtung innerhalb selbigens platziert wird.

Die bevorzugt vorgesehene Integration einer Abrichteinrichtung wurde oben bereits erläutert, alternativ ist es auch denkbar, dass das Abrichten der abrichtbaren Anfaswerkzeuge außerhalb der Anfasvorrichtung erfolgt.

Gekoppelt an die Anfaseinrichtung kann ein automatischer Werkzeugwechsler vorgesehen werden. Der Anfasprozess selbst kann mit oder ohne Kühlschmierstoff erfolgen, wobei auch an ein Anfasen mit Luft gedacht wird.

Die Maschinenachssteuerung erlaubt zudem das schleifende Anfasen mit Drehrichtung des Anfaswerkzeugs, insbesondere der Anfasschnecke, von der Stirnseite aus in die Zahnflanke, aber auch umgekehrt.

Desweiteren offenbart die Erfindung als eigenständig schutzfähig eine Anordnung aufweisend einen eine Drehachse definierenden, zur Aufnahme in einem Bearbeitungskopf einer Verzahnungsmaschine vorgesehenen Dorn, der ein zum Erzeugen einer Fase an einer Zahnstirnkante einer Werkstückverzahnung ausgelegtes Anfaswerkzeug mit geometrisch unbestimmter Schneide trägt, welches insbesondere schneckenförmig gestaltet ist, wobei der Dorn weiter ein oder mehrere Verzahnungswerkzeuge zur Verzahnungsbearbeitung der Werkstücke der Verzahnung aufweist, insbesondere einen Wälzfräser zur Erzeugung der Werkstückverzahnung.

Weitere Merkmale, Einzelheiten und Vorteile der Erfindung ergeben sich aus der nachstehenden Beschreibung mit Bezug auf die beigefügten Figuren, von denen
- Fig. 1: eine Anfasvorrichtung in einer Perspektivansicht zeigt,
- Fig. 2: schematisch die Bearbeitungseingriffe an Rechtsflanke (Fig. 2A) und Linksflanke (Fig. 2B) einer Werkstückverzahnung zeigt,
- Fig. 3: eine Ansicht eines Abrichteingriffs zwischen einer Abrichtrolle und einer Anfasschnecke ist, und
- Fig. 4: eine erläuternde Schnittdarstellung der Zuordnung von Eingriffsbereichen des Abrichters, der Anfasschnecke und der Werkstückverzahnung ist.

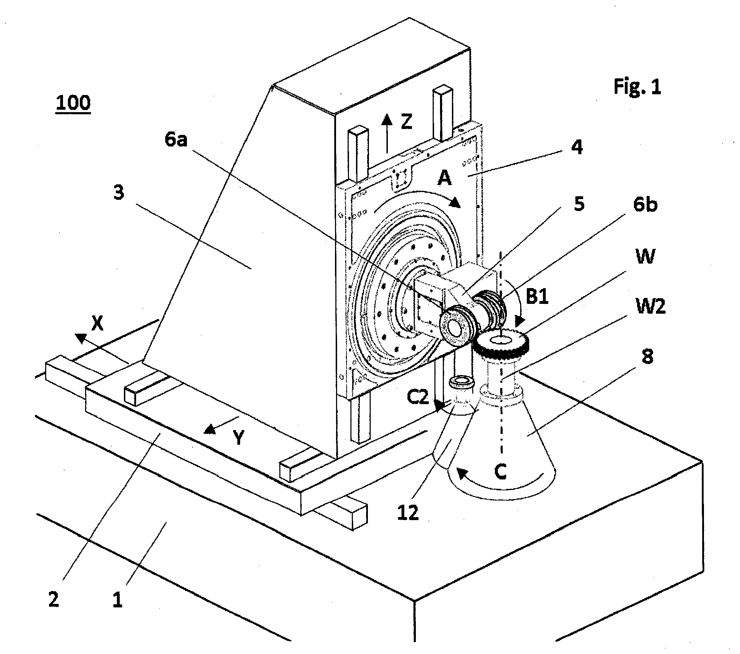

In Fig. 1 ist eine Anfasmaschine 100 in Perspektivansicht dargestellt. Die Maschine 100 trägt auf einer Seite ihres Maschinenbetts 1 eine Werkstückspindel 8, auf der ein Werkstück W aufgespannt ist, das in diesem Ausführungsbeispiel schrägverzahnt ist. Auf der gegenüberliegenden, werkzeugseitigen Seite des Maschinenbetts 1 ist ein in diesem Ausführungsbeispiel plattenförmiger Radialschlitten 2 vorgesehen, über dessen Bewegungsachse X der Achsabstand zwischen der axial mit W₂ bezeichneten Werkstückachse und der Werkzeugachse einstellbar ist, wobei die Werkstückdrehachse als Maschinendrehachse mit C und die Werkzeugdrehachse als Maschinendrehachse mit B1 bezeichnet ist. Auf dem Radialschlitten 2 ist ein in diesem Ausführungsbeispiel turmartig gestalteter Transversalschlitten 3 aufgesetzt, dessen Bewegungsachse Y quer, in diesem Ausführungsbeispiel orthogonal zur Radialachse X verläuft. Die Schlitten 2 und 3 bilden somit eine Kreuzschlittenanordnung.

An der dem Werkstück W zugewandten Seite des Transversalschlittens 3 ist ein Hubschlitten 4 angeordnet, dessen Bewegungsachse Z eine Komponente in Richtung der Werkstückachse W₂ aufweist und in diesem Ausführungsbeispiel parallel dazu verläuft. An dem Hubschlitten 4 ist wiederum ein mit einem in diesem Ausführungsbeispiel als Direktantrieb gestaltetem Antrieb ausgestatteter Werkzeugkopf 5 angeordnet, und zwar mit einem weiteren rotatorischen Drehfreiheitsgrad A. Die Drehachse A ist in diesem Ausführungsbeispiel parallel zur radialen Zustellachse X vorgesehen.

Der Werkzeugkopf 5 ist derart gestaltet, dass bezogen auf die entlang der Radialachse X gesehenen Erstreckung zur linken und zur rechten Seite jeweils ein mit geometrisch unbestimmter Schneide abtragendes Anfaswerkzeug 6a, 6b, hier von dem Direktantrieb drehangetrieben, angeordnet ist. Die Anfaswerkzeuge 6a, 6b sind in Form von abrichtbaren Schleifschnecken gebildet.

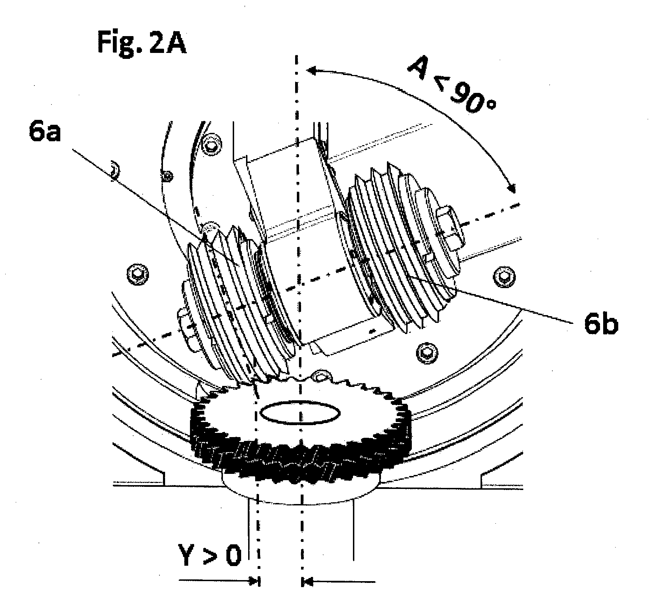

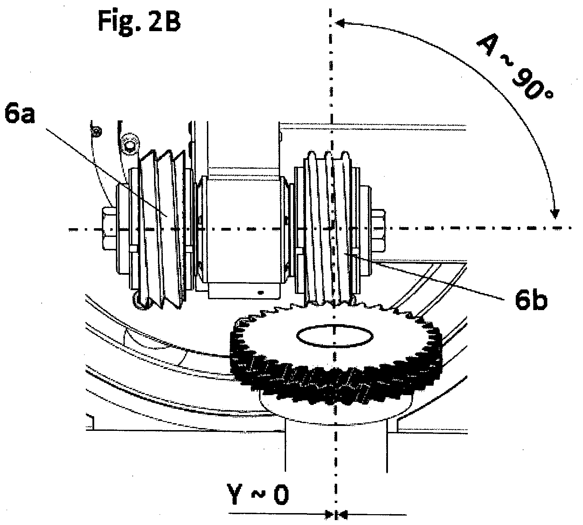

Wie besser aus Fig. 2 zu erkennen ist, sind die beiden Abrichtschnecken 6a und 6b jeweils für einen Einflankenschliff vorgesehen. So erzeugt die Anfasschnecke 6a an der Zahnstirnkante der Rechtsflanken (stumpfe Kante) der Schrägverzahnung die gewünschte Fasenform (siehe Fig. 2A), während die anderen Anfasschnecke 6b zur Erzeugung der Fasen an den Zahnstirnkanten der Linksflanken (spitze Kante) des Werkstücks vorgesehen ist (siehe Fig. 2B).

Beim Arbeiten an den stumpfen Kanten (Fig. 2A) wird über die Maschinenachssteuerung ein Schwenkwinkel A_{A} (= 90°-A in Fig. 2A) von in diesem Ausführungsbeispiel mehr als 20° Neigung eingestellt. Zudem erfolgt die Bearbeitung außermittig, hier ist der Bearbeitungsort um wenigstens eine Zahnlückenbreite gegenüber einer durch die Werkstückachse W₂ gehenden Parallele zur Radialachse X in tangentialer Richtung Y versetzt.

Idealerweise kann für die Betrachtung der maximalen Aussermittigkeit des Werkzeug-Eingriffspunktes und der aus der Maschinenmitte heraus maximalen Verdrehung der zu bearbeitenden Zahnflanke zur Erzeugung eines maximalen Fasenwinkels an einer Zahnflanke der Schattenwurf der Gegenflanke auf die zu bearbeitende Zahnflanke derart herangezogen werden, dass von der Gegenflanke auf die zu bearbeitende Zahnflanke gerade noch kein Schatten geworfen wird, wobei die Richtung des Lichts zur Erzeugung des Schattenwurfes parallel zur Radialachse der Maschine verläuft.

Dagegen wird beim schleifenden Anfasen der spitzen Kante (Fig. 2B) ein Schwenkwinkel A_{B} (= 90°-A in Fig. 2B) von weniger als 12° eingestellt, bevorzugt kleiner als 8°, insbesondere als 4°. Insbesondere kann die Werkzeugdrehachse (bei vertikaler Werkstückachse W1) nahezu horizontal verlaufen. Auch ist bei dieser Bearbeitung vorgesehen, dass die Anfasschnecke 6b nahezu mittig arbeitet, mit einem Tangentialversatz von bei diesem Ausführungsbeispiel geringer als einer Zahnlückenbreite.

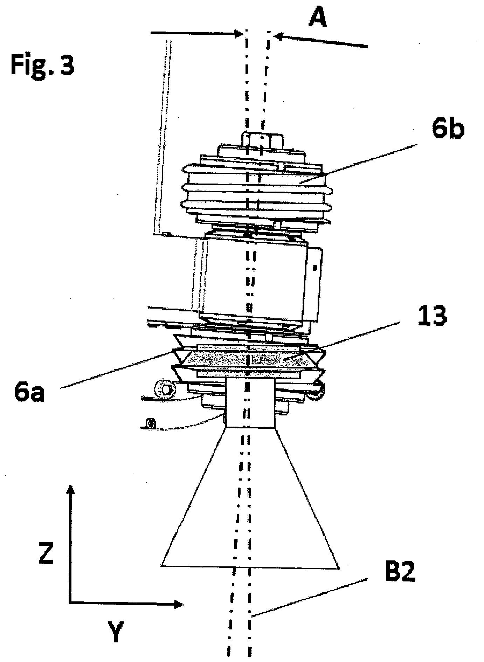

Wie weiter aus Fig. 1 erkennbar ist, ist zwischen der Werkstückspindel 8 und der Werkzeugseite eine Abrichteinrichtung 12 angeordnet, die in Fig. 3 schematisch dargestellt ist. Die Abrichteinrichtung 12 weist in diesem Ausführungsbeispiel ein um eine beispielsweise parallel zur Bewegungsachse Z vorgesehene Drehachse B2 drehbare Abrichtrolle 13 auf. Durch Ausnutzung der werkzeugseitigen Bewegungsachsen X, Y, Z und A lässt sich eine Anfasschnecke in Abrichteingriff mit der Abrichtrolle 13 bringen.

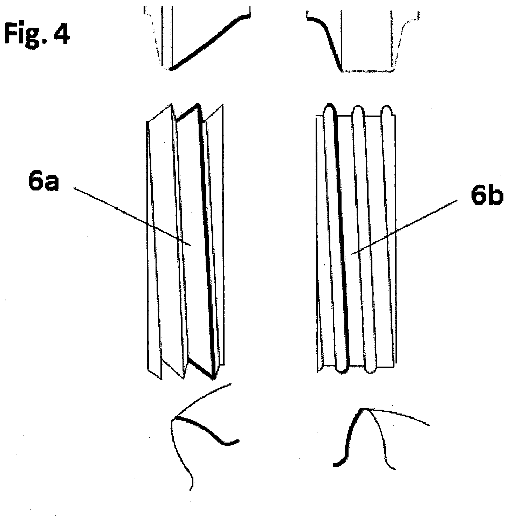

Nicht in den Figuren dargestellt, aber vorgesehen sind in diesem Ausführungsbeispiel zwei Abrichtrollen 13a, 13b, von denen eine für das Abrichten der für die stumpfe Kante vorgesehenen Anfasschnecke 6a und eine für die spitze Kante vorgesehene Anfasschnecke 6b vorgesehen ist. Die jeweilig zueinander passenden Bereiche sind in Fig. 4 dargestellt, in der im Schnitt gesehen die Form der Fase an der spitzen Kante links unten und die Form der Fase an der stumpfen Kante rechts unten jeweils mit einem Schnitt an der Verzahnung dargestellt ist, während im oberen Abschnitt von Fig. 4 in einem Schnitt durch die Anfasschnecke das profilgebende Profil der jeweiligen Abrichtrolle dargestellt ist.

Anstelle der oder zusätzlich zu den profilabrichtenden Abrichtrollen könnte die Abrichteinrichtung jedoch auch für ein Formabrichten ausgelegt sein. Bei Verwendung nicht abrichtbarer Schleifschnecken als Anfaswerkzeuge kann die Abrichteinheit 12 auch entfallen oder dennoch vorgesehen sein, um für die Maschine die Optionen abrichtbarer sowie nicht abrichtbarer Schleifwerkzeuge zum Anfasen offenzulassen.

Für einen Anfasvorgang der Anfasmaschine 100 wird dann beispielsweise wie folgt vorgegangen:
Zunächst werden die Verzahnungsdaten des mit einer Fase zu versehenden Werkstückes bestimmt, einschließlich der die Fase charakterisierenden Parameter. Beispiele derartiger Fasencharakterisierungen sind die Form der Fase, beispielsweise ZKM, der Fasenwinkel und die Fasenbreite, wobei als Fasenbreite beispielsweise der an der Orthogonalen zur Zahnstirnfläche gemessene Abstand der durch die Fase gebildeten neuen schrägen Kante von der Zahnstirnfläche herangezogen werden kann. Die Fase reicht bis zum Fußbereich und ist z.B. kommaförmig. Als alternative Fasenform käme beispielsweise eine Fase in Betracht, die sich auch in Richtung auf den Fußbereich der Zahnlücke verjüngt, aber vor dem Fußbereich verschwindet.

Nun erfolgt in Abhängigkeit dieser Verzahnungs- und Fasendaten die Prozessauslegung mit der Werkzeugauslegung, d.h. in diesem Fall der Bestimmung des Profils für die Anfasschnecken 6a, 6b, in Abstimmung mit den für den Prozess vorgesehenen Maschinenachssteuerungen für den jeweiligen Bearbeitungseingriff der Anfasschnecken 6a, 6b, unter Berücksichtigung der oben erläuterten Einflussnahmen.

Sofern nur einzelne Werkstücke mit einer Fase versehen sind, könnte das Profil der Anfasschnecken dazu z.B. separat außerhalb der Maschine durch ein Formabrichten erzeugt werden. Sollen dagegen größere Werkstückchargen bearbeitet werden, wird nach einer Anzahl von beispielsweise 50 bis 100 Anfasvorgängen ein Nachprofilieren der Anfasschnecken erforderlich werden. In diesem Fall werden bevorzugt die oben erläuterten Abrichtrollen entsprechend der vorgenommenen Werkzeugauslegung angefertigt.

Im Prozess selbst werden dann die Werkzeugachsen von der Maschinensteuerung gemäß der vorgenommenen Prozessauslegung angefahren und dadurch die Anfasschnecken 6a, 6b nacheinander in Einflanken-Bearbeitungseingriff mit dem Werkstück gebracht.

Dabei wird bevorzugt gemäß der folgenden Arbeitssequenz gearbeitet: Zuerst wird mit der Anfasschnecke 6a eine Fase an der stumpfen Kante an der dem Betrachter in Fig. 1 zugewandten Oberseite des Werkstücks W angefast. Anschließend wird die Anfasschnecke 6a außer Einsatz gebracht und stattdessen die Anfasschnecke 6b in Eingriff mit den spitzen Kanten an der Oberseite des Werkstücks gebracht.

Nach Erzeugen der Fasen an der Oberseite werden entsprechend die Fasen an der dem Betrachter in Fig. 1 abgewandten Unterseite des Werkstücks W erzeugt. Dazu wird der Werkzeugkopf 5 gegenüber der Bearbeitung an der oberen Seite um 180° verdreht, so dass wiederum die richtige Zuordnung der Eingriffsbedingungen zwischen den Anfasschnecken 6a, 6b und der stumpfen Kante/spitzen Kante der Schrägverzahnung wiederhergestellt ist.

Auch Abwandlungen dieser Gestaltung sind denkbar. So könnte zunächst die Anfasschnecke 6a zuerst an der Oberseite und dann an der Unterseite arbeiten und die Anfassschnecke 6b anschließend zum Einsatz kommen, um ein Beispiel zu nennen.

Der Bearbeitungseingriff selbst ist von der Art her ein wälzender Bearbeitungseingriff, bei dem sich die Anfasschnecken 6a, 6b und das Werkstück W synchronisiert zueinander drehen. Dies wird bevorzugt durch eine CNC-Maschinenachssteuerung erreicht, die sowohl die Werkstück- als auch Werkzeugdrehachsen C, B1 steuert.

Nach einer Anzahl von Bearbeitungen wird der Werkzeugkopf 5 in eine Abrichtposition verschwenkt.

Wird nun nach Bearbeitung einer Werkstückcharge eine zweite Charge von Werkstücken anzufasen sein, die sich hinsichtlich ihrer Fasenparameter von denen der ersten Charge unterscheidet, was zu einer anderen Werkzeugauslegung führt, kann diese durch Austausch der Abrichtrollen 13 eingeleitet werden, die für das Profilieren gemäß der neuen Fasenparameter ausgelegt sind. Mit den neuen Abrichtrollen 13' kann nun vor Bearbeitungsaufnahme eine Umprofilierung der Anfasschnecken 6a, 6b erfolgen, so dass trotz Chargenwechsels kein Werkzeugwechsel am Werkzeugkopf 5 erfolgen muss.

Ist dagegen der Unterschied in den Fasenparametern ausreichend klein, um bei unverändertem Profil der Abrichtschnecken fortfahren zu können, erfolgt die Abstimmung durch Änderung der Maschinenachssteuerungen und die Abrichtschnecke erfährt mit Bezug auf die vorherigen Maschinenachsbewegungen diese Abstimmung reflektierende Zusatzbewegungen.

Die Erfindung ist nicht auf die in den obigen Beispielen beschriebenen konkreten Ausführungsformen eingeschränkt. Vielmehr können die einzelnen Merkmale der obigen Beschreibung sowie der nachstehenden Ansprüche für die Verwirklichung der Erfindung in ihren Ausführungsformen wesentlich sein.

## Patentansprüche

1. Verfahren zur materialabtragenden Erzeugung einer Fase an einer Zahnstirnkante einer Werkstückverzahnung (W) mit einem drehend angetriebenen Anfaswerkzeug (6a, 6b) in einem durch gesteuerte Maschinenachsbewegungen hervorgerufenen Bearbeitungseingriff zwischen dem Anfaswerkzeug und der ebenfalls drehend angetriebenen Werkstückverzahnung,
**dadurch gekennzeichnet, dass** mit geometrisch unbestimmter Schneide abgetragen wird und das Abtragen in einer in Abhängigkeit von vorgegebenen, die zu erzeugende Fase charakterisierenden Parametern vorgenommenen Abstimmung zwischen einer insbesondere änderbaren Profilierung des Anfaswerkzeugs und einer für den Bearbeitungseingriff herangezogenen Maschinenachssteuerung erfolgt.

2. Verfahren nach Anspruch 1, bei dem der Bearbeitungseingriff ein wälzender Bearbeitungseingriff ist und das Anfaswerkzeug insbesondere schneckenförmig ist.

3. Verfahren nach Anspruch 1 oder 2, bei dem die Abstimmung ein das Profil des Anfaswerkzeugs änderndes Abrichten umfasst.

4. Verfahren nach Anspruch 3, bei dem zeitlich zumindest teilweise überlappend mit dem Abrichten eine zumindest teilweise Neuberechnung der Steuerparameter der Maschinenachssteuerung vorgenommen wird.

5. Verfahren nach einem der vorhergehenden Ansprüche, bei dem das Anfaswerkzeug ein erstes Anfaswerkzeug (6a) ist und die damit erzeugte Fase eine erste Fase an einer Flanke einer Zahnlücke ist, und bei dem an der anderen Flanke der Zahnlücke eine durch insbesondere unterschiedliche Parameter charakterisierte zweite Fase mit einem insbesondere vom ersten Anfaswerkzeug unterschiedlichen zweiten Anfaswerkzeug (6b) erzeugt wird.

6. Verfahren nach Anspruch 5, bei dem die erste und die zweite Fase zeitlich hintereinander erzeugt werden.

7. Verfahren nach Anspruch 5 oder 6, bei dem beide Anfaswerkzeuge von demselben Antrieb angetrieben werden.

8. Verfahren nach einem der vorhergehenden Ansprüche, bei dem die charakterisierenden Parameter für die erste und/oder zweite Fase eine Formvorgabe enthalten.

9. Verfahren nach einem der vorhergehenden Ansprüche, bei dem die charakterisierenden Parameter für die erste und/oder zweite Fase eine oder mehrere Randbedingungen enthalten.

10. Vorrichtung (100) zur materialabtragenden Erzeugung einer Fase an einer Zahnstirnkante einer Werkstückverzahnung (W),
mit einer drehbar angetriebenen Werkstückspindel zur Aufnahme eines die Werkstückverzahnung tragenden Werkstücks, einem das Abtragen in Bearbeitungseingriff mit der Werkstückverzahnung bewirkenden drehbar angetriebenen Anfaswerkzeug (6a, 6b) und einer Steuereinrichtung, von der gesteuerte Maschinenachsbewegungen den Bearbeitungseingriff herbeiführen,
**dadurch gekennzeichnet, dass** das Anfaswerkzeug mit geometrisch unbestimmter Schneide abträgt und eine insbesondere änderbare Profilierung aufweist und die Steuereinrichtung die für das Abtragen herangezogenen Maschinenachsbewegungen in einer in Abhängigkeit von vorgegebenen, die zu erzeugende Fase charakterisierenden Parametern vorgenommenen Abstimmung mit der Profilierung des Anfaswerkzeugs betreibt.

11. Vorrichtung nach Anspruch 10, mit wenigstens zwei, bevorzugt wenigstens drei, insbesondere wenigstens vier Maschinenachsen (X, Y, Z, A) zur Einstellung der Relativlage zwischen Anfaswerkzeug und Werkstückverzahnung, die unabhängig voneinander ansteuerbar sind und wenigstens eine den Achsabstand zwischen der Drehachse der Werkstückverzahnung und einer Drehachse des Anfaswerkzeugs ändernde Radialachse (X) und eine wenigstens eine Richtungskomponente parallel zur Drehachse der Werkstückverzahnung aufweisende Axialachse (Z) umfassen.

12. Vorrichtung nach Anspruch 10 oder 11, mit einer Abrichteinrichtung (Z) zum Abrichten des Anfaswerkzeugs, die bevorzugt derart angeordnet ist, dass ein Abrichteingriff zwischen einem Abrichter (13) der Abrichteinrichtung und dem Anfaswerkzeug ohne Aufspannungsänderung des Anfaswerkzeugs über Maschinenachsbewegungen der Vorrichtung erreichbar ist.

13. Vorrichtung nach einem der Ansprüche 10 bis 12, bei der ein zweites Anfaswerkzeug (6b) vorgesehen ist, bevorzugt mit einer parallel, insbesondere koaxial zur Achse des ersten Anfaswerkzeugs angeordneten Drehachse (B1), und insbesondere ein gemeinsamer Antrieb für beide Anfaswerkzeuge vorgesehen ist.

14. Vorrichtung nach Anspruch 12 oder 13, die ein zeitliches Überlappen eines Bearbeitungseingriffs eines der Anfaswerkzeuge mit der Werkstückverzahnung und eines Abrichteingriffs des anderen Anfaswerkzeugs mit dem Abrichter erlaubt.

## Claims

1. A method for producing a chamfer on a tooth end edge of a workpiece toothing (W) by removing material with a rotationally driven chamfering tool (6a, 6b) in a machining operation brought about by controlled axial machine movements between the chamfering tool and the likewise rotationally driven workpiece toothing,
**characterised in that** material is removed with a geometrically undefined cutting edge, and the removal takes place in a coordinated action between an in particular changeable profiling of the chamfering tool and an axial machine control used for the machining operation, performed in dependence on predetermined parameters defining the chamfer to be produced.

2. The method according to claim 1, wherein the machining operation is a skiving machining operation, and the chamfering tool is in particular helical in shape.

3. The method according to claim 1 or 2, wherein the coordinated action comprises dressing that alters the profile of the chamfering tool.

4. The method according to claim 3, wherein the control parameters of the axial machine control are at least partially recalculated in a manner at least partially overlapping in time with the dressing.

5. The method according one of the preceding claims, wherein the chamfering tool is a first chamfering tool (6a), and chamfer produced therewith is a first chamfer on a flank of a tooth gap, and wherein a second chamfer defined in particular by different parameters is produced on the other flank of the tooth gap with a second chamfering tool (6b) that in particular is different from the first chamfering tool.

6. The method according to claim 5, wherein the first and second chamfers are produced in chronological succession.

7. The method according to claim 5 or 6, wherein both chamfering tools are driven by the same drive.

8. The method according to one of the preceding claims, wherein the defining parameters for the first and/or second chamfer contain a predetermined shape.

9. The method according to one of the preceding claims, wherein the defining parameters for the first and/or second chamfer contain one or more boundary conditions for said chamfer(s).

10. A device (100) for producing a chamfer on a tooth end edge of a workpiece toothing (W) by removing material,
comprising a rotationally driven workpiece spindle for mounting a workpiece bearing the workpiece toothing, a rotationally driven chamfering tool (6a, 6b) that brings about the removal of material in a machining operation with the workpiece toothing, and a control device by means of which controlled machine movements bring about the machining operation,
**characterised in that** the chamfering tool removes material with a geometrically undefined cutting edge and has an in particular changeable profiling, and the control device operates the axial machine movements performed for the removal of material in a coordinated action with the chamfering tool that is performed in dependence on predetermined parameters defining the chamfer to be produced.

11. The device according to claim 10, comprising at least two, preferably at least three, and in particular at least four machine axes (X, Y, Z, A) for setting the relative position between the chamfering tool and the workpiece toothing, which can be controlled independently of one another, and comprises at least one radial axis (X) that alters the axial distance between the axis of rotation of the workpiece toothing and an axis of rotation of the chamfering tool, and an axial axis (Z) having at least one direction component parallel to the axis of rotation of the workpiece toothing.

12. The device according to claim 10 or 11, comprising a dressing device (Z) that is for dressing the chamfering tool and is preferably arranged so that a dressing operation between a dresser (13) of the dressing device and the chamfering tool can be achieved without changing the clamping of the chamfering tool via axial machine movements of the device.

13. The device according to one of claims 10 to 12, wherein a second chamfering tool (6b) is provided with an axis of rotation (B1) that is preferably arranged parallel to, and in particular coaxially to the axis of the first chamfering tool, and in particular one common drive is provided for both chamfering tools.

14. The device according to claim 12 or 13, allowing there to be an overlap in time between a machining operation of one of the chamfering tools with the workpiece toothing and a dressing operation of the other chamfering tool with the dresser.

## Revendications

1. Procédé de réalisation d'un chanfrein par enlèvement de matière sur une arête frontale de dent d'une denture de pièce à usiner (W) à l'aide d'un outil de chanfreinage (6a, 6b) entraîné en rotation lors d'une opération d'usinage résultant de déplacements contrôlés, selon des axes machine, de l'outil de chanfreinage par rapport à la denture de la pièce à usiner également entraînée en rotation,
**caractérisé en ce que** l'enlèvement de matière s'effectue à l'aide d'une lame de géométrie indéfinie et selon une coordination entre un profilage notamment modifiable de l'outil de chanfreinage et un contrôle des axes machine servant à l'opération d'usinage, laquelle coordination est réalisée en fonction de paramètres de définition du chanfrein à produire.

2. Procédé selon la revendication 1, dans lequel l'opération d'usinage est une opération de génération et l'outil de chanfreinage est notamment de forme hélicoïdale.

3. Procédé selon la revendication 1 ou 2, dans lequel la coordination comprend un dressage visant à modifier le profil de l'outil de chanfreinage.

4. Procédé selon la revendication 3, dans lequel les paramètres de contrôle des axes machine sont recalculés au moins en partie en même temps que s'effectue une partie au moins du dressage.

5. Procédé selon l'une des revendications précédentes, dans lequel l'outil de chanfreinage consiste en un premier outil de chanfreinage (6a) et le chanfrein qu'il produit consiste en un premier chanfrein réalisé sur un flanc d'un entredent, un deuxième chanfrein défini par des paramètres notamment différents étant produit sur l'autre flanc de l'entredent, à l'aide d'un deuxième outil de chanfreinage (6b) notamment différent du premier outil de chanfreinage.

6. Procédé selon la revendication 5, dans lequel le premier et le deuxième chanfrein sont produits successivement.

7. Procédé selon la revendication 5 ou 6, dans lequel les deux outils de chanfreinage sont entraînés par le même dispositif d'entraînement.

8. Procédé selon l'une des revendications précédentes, dans lequel les paramètres de définition du premier et/ou du deuxième chanfrein contiennent une forme prédéterminée.

9. Procédé selon l'une des revendications précédentes, dans lequel les paramètres de définition du premier et/ou du deuxième chanfrein contiennent une ou plusieurs contraintes.

10. Dispositif (100) de réalisation d'un chanfrein par enlèvement de matière sur une arête frontale de dent d'une denture de pièce à usiner (W), comportant :
une broche porte-pièce entraînée en rotation et destinée à recevoir une pièce à usiner portant ladite denture de pièce à usiner ; un outil de chanfreinage (6a, 6b) entraîné en rotation pour réaliser l'enlèvement lors d'une opération d'usinage sur ladite denture de pièce à usiner ; et un dispositif de contrôle contrôlant les déplacements selon les axes machine pour mettre en œuvre l'opération d'usinage,
**caractérisé en ce que** l'outil de chanfreinage effectue l'enlèvement de matière à l'aide d'une lame de géométrie indéfinie et présente un profilage notamment modifiable, et le dispositif de contrôle commande les déplacements selon les axes machine servant audit enlèvement de matière, selon une coordination avec le profilage de l'outil de chanfreinage en fonction de paramètres prédéterminés de définition du chanfrein à produire.

11. Dispositif selon la revendication 10, comportant au moins deux, de préférence au moins trois et notamment au moins quatre axes machine (X, Y, Z, A) qui permettent d'établir la position relative entre l'outil de chanfreinage et la denture de la pièce à usiner et qui peuvent être commandés indépendamment les uns des autres, lesquels axes comprennent au moins un axe radial (X) permettant de modifier la distance axiale entre l'axe de rotation de la denture de pièce à usiner et un axe de rotation de l'outil de chanfreinage, ainsi qu'un axe axial (Z) présentant au moins une composante directionnelle parallèle à l'axe de rotation de la denture de pièce à usiner.

12. Dispositif selon la revendication 10 ou 11, comportant une unité de dressage (Z) permettant de dresser l'outil de chanfreinage et agencée de préférence de façon qu'une opération de dressage puisse être obtenue entre un dresseur (13) de l'unité de dressage et l'outil de chanfreinage sans modification de la fixation de l'outil de chanfreinage par le biais de déplacements du dispositif selon les axes machine.

13. Dispositif selon l'une des revendications 10 à 12, dans lequel est prévu un deuxième outil de chanfreinage (6b) présentant de préférence un axe de rotation (B1) parallèle, notamment coaxial, à l'axe du premier outil de chanfreinage, et dans lequel est notamment prévu un dispositif d'entraînement commun pour les deux outils de chanfreinage.

14. Dispositif selon la revendication 12 ou 13, permettant la réalisation d'une opération d'usinage de la denture de pièce à usiner à l'aide d'un des outils de chanfreinage en même temps que la réalisation d'une opération de dressage de l'autre outil de chanfreinage au moyen du dresseur.
